(19) Europäisches Patentamt
European Patent Office
Office européen des brevets

(11) **EP 3 171 145 A1**

(12) **EUROPEAN PATENT APPLICATION**

(43) Date of publication:
**24.05.2017 Bulletin 2017/21**

(51) Int Cl.:
**G01L 1/10** (2006.01)      **B82Y 35/00** (2011.01)
**G01Q 60/50** (2010.01)      **H03B 5/30** (2006.01)

(21) Application number: **15195823.8**

(22) Date of filing: **23.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ETH Zurich**
**8092 Zurich (CH)**

(72) Inventors:
• **RAMASUBRAMANIAN, Chitra**
**8044 Zürich (CH)**
• **ZILBERBERG, Oded**
**8049 Zürich (CH)**
• **PAPARIELLO, Luca**
**8051 Zürich (CH)**

(54) **METHOD AND SENSOR FOR MEASURING SMALL FORCES**

(57)      The present invention relates to a method for measuring the amplitude ($F_0$) of a periodic force, wherein the method comprises the steps of: providing a parametrically driven nonlinear oscillator subject to a periodic external force whose amplitude ($F_0$) is to be measured, wherein the oscillator is configured such that the frequency response of the oscillator exhibits a double jump hysteresis, wherein when the frequency ($\omega_p$) of the parametric drive and the frequency of the external force ($\omega_f$) are swept downwards for positive Duffing nonlinearity and upwards for negative Duffing nonlinearity, the frequency response ($|X|$) of the oscillator exhibits a first jump (J1) and a successive second jump (J2), sweeping said frequency ($\omega_p$) of the parametric drive downwards for positive Duffing nonlinearity and upwards for negative Duffing nonlinearity, wherein a jump frequency ($\omega^*$) of the parametric drive at which the second jump occurs and or the height (H) of the second jump (J2) are measured, and wherein said amplitude of said force ($F_0$) is determined using said jump frequency ($\omega^*$) and/or said height (H). Further, the invention relates to a corresponding sensor for measuring such an amplitude.

Fig. 2

**Description**

Metrology has been revolutionized in the recent past, spurred by the enormous advances in the development and fabrication of sensors based on tiny mechanical resonators [1-3]. Depending on their sizes and mass, these sensors are used to detect a wide range of forces, mass, charges and magnetic fields [4-6]. Extremely successful for sensing applications are microelectromechanical systems MEMS), which due to their small size, ease of fabrication, and high spring constants lead to unprecedented sensitivities in a wide range of applications spanning engineering, chemistry and biology [7-9]. Successful technologies based on MEMS are atomic force microscopy (AFM) [10] and magnetic resonance force microscopy MRFM) [11]. In both schemes, the conventional operational zone is essentially based on features of the linear oscillator. Nonetheless, the utility of these platforms for sensing is strongly limited by noise and dissipation which damp the resonator motion and blur the measured signals. For force detection, MEMS operate in a dynamic range defined by the onset of nonlinearities and thermal noise [12].

Further technical advances led to nanoelectromechanical systems (NEMS) characterized by their small mass, very high frequencies, and high quality factors that are useful for nanoscale detection [13]. Recent examples of NEMS used for detection of ultrasmall masses [2], as well as weak external forces (pico Newtons corresponding to single charges and spins)[1], are graphene resonators of atomic scale dimensions [14]. Interestingly, NEMS can, also, operate in the quantum regime and provide a fascinating playground in which to verify and revisit basic concepts of quantum mechanics. In both NEMS and MEMS, techniques which enhance the sensitivity of detection are very important. A most successful technique is that of parametric resonance where the frequency of the linear oscillator is modulated in time (parametrically driven) at twice the natural frequency of the oscillator [15]. Parametric driving is now a ubiquitous feature in most resonator based devices. The parametrically driven oscillator boasts a fascinating stability diagram called "Arnold's tongues" delineating zones where the oscillator is stable from those where it is exponentially unstable, as a function of its natural frequency and parametric driving strength. Indeed, driving the damped oscillator at twice the natural frequency corresponds to driving in the vicinity of the first instability tongue. Close to the stable zone boundary, the response of the linear oscillator is greatly enhanced, resulting in a pronounced amplification of signal-to-noise ratios and hence detection sensitivity [15]. This enhancement is however, also limited by nonlinearities.

Nonlinearities, however become important as resonator size is scaled down [16]. They arise from geometric effects, external potentials, dissipation, or even from feedback cooling used to control the oscillations of the resonator.

Often nonlinear effects are circumvented by ensuring that the resonator displacement remains in the linear regime. This strongly restricts the dynamic range within which the system operates, even making it vanishingly small in NEMS, and limit the scope for applications.

These small and potentially most sensitive devices require operation in the nonlinear regime.

Recent works focus on directly using nonlinearities to improve the sensitivity of parametrically amplified detectors [17-18]. For instance, though quartic (Duffing) nonlinearities stabilize the parametric oscillator, it maintains a "memory" of the underlying instability tongue structure in its frequency dependent response. The precision measurement of this lobe then provides a very robust and stable way of detecting masses [17].

Based on the above, the problem underlying the present invention is to provide a sensitive method and a sensor that are capable of measuring weak forces, particularly down to the zepto Newton range.

This problem is solved by a method having the features of claim 1. Preferred embodiments are stated in the sub claims and are described below.

According to claim 1, this method for measuring the amplitude $F_0$ of a periodic force comprises the steps of:

- providing a parametrically driven nonlinear oscillator with either positive or negative Duffing nonlinearity $\alpha$, subject to a periodic external force whose amplitude $F_0$ is to be measured,

- wherein the oscillator is configured such that the frequency response of the oscillator exhibits a double jump hysteresis, wherein when both the frequency $\omega_p$ of the parametric drive and the frequency $\omega_f$ of the external force are swept downwards for positive Duffing nonlinearity and swept upwards for negative Duffing nonlinearity $\alpha$ (e.g. towards and/or across the resonance frequency $\omega_0$ which is also denoted as bare or unperturbed frequency of the underlying unperturbed linear oscillator), the frequency response $|X|$ of the oscillator exhibits a first jump and a successive second jump,

- sweeping both the frequency $\omega_p$ of the parametric drive and the frequency $\omega_f$ of the external force downwards for positive Duffing nonlinearity $\alpha$ and upwards for negative Duffing nonlinearity $\alpha$, wherein a jump frequency $\omega^*$ at which the second jump occurs and or the height of the second jump are obtained from a direct measurement of the position of the resonator as the frequencies are swept and

- wherein said amplitude of said force $F_0$ is determined using said jump frequency $\omega^*$ and/or said height.

Particularly, the sensor according to the invention can be calibrated against a range of known forces by measuring the jump frequency ($\omega^*$) and height (H). The forces to be used for calibration depend on the device considered.

Particularly, the interplay between the parametric drive, Duffing nonlinearity, and particularly a nonlinear damping in the presence of an external force (signal) generates surprising features in the response of the oscillator.

Particularly, these features allow a new and precise way for detection of both weak and ultra weak forces. Specifically, the hysteretic response of the oscillator, during the downward (resp. upward) sweep of the frequency, results in an additional jump in the response. This additional jump is a direct manifestation of the existence of the external force, which can then be extracted from both the frequency at which the jump occurs, as well as from its height. It has been found that the jump frequency is extremely sensitive to changes in the external force.

According to an embodiment of the present invention, the frequency ($\omega_p$) of the parametric drive is detuned by less than 4% from twice the resonance frequency ($\omega_0$) of the underlying unperturbed linear oscillator, and wherein the frequency ($\omega_f$) of the periodic external force ($F_0$) is detuned by less than 4% from the resonance frequency ($\omega_0$).

Further, according to an embodiment of the present invention, the strength ($\lambda$) of the parametric drive is chosen to be in the unstable regime of the underlying unperturbed linear oscillator.

Further, according to an embodiment of the present invention, the oscillator is configured such that when the frequency of both the parametric drive ($\omega_p$) and external drive ($\omega_f$) are swept upwards across the resonance frequency ($\omega_0$) of the underlying unperturbed linear oscillator, the frequency response ($|X|$) gradually increases along a first stable branch (I) to a maximal value where it hits a first upper bifurcation (B1) and then abruptly drops to a value of a lower second stable branch (III), and when the frequency of both the parametric drive ($\omega_p$) and external drive ($\omega_f$) are swept downwards again, the frequency response ($|X|$) increases across said lower second branch (III) until it hits a second bifurcation (B2) from which an unstable first branch (II) extends to said first upper bifurcation (B1) and from which it abruptly undergoes said first jump (J1) to a stable third branch (IV) of an island, which island is formed by said third branch (IV) and an unstable second branch (V), from which third branch (IV) it then decreases further until it hits a third bifurcation (B3) (of said island) at said jump frequency ($\omega^*$) where it undergoes said second jump to said stable first branch (I).

Further, in an embodiment, the equation of motion governing the dynamics of said parametrically driven nonlinear oscillator subject to said periodic external force is

$$\ddot{x} + \omega_0{}^2\left(1 - \lambda \cos \omega_p t\right)x + \gamma \dot{x} + \alpha x^3 + \eta x^2 \dot{x} = \frac{F_0}{M}\cos \omega_f t \qquad (1)$$

where, $M$ is the mass of the oscillator, $\omega_0$ is said resonance frequency of the linear oscillator, $\gamma$ the linear damping and $\lambda$ and $\omega_p$ denote the strength and frequency of the parametric drive, and wherein the nonlinearities are described by the Duffing parameter $\alpha$ characterizing the quartic contribution to the oscillator potential ($\alpha$ can be positive or negative), and wherein $\eta$ is the strength of the nonlinear feedback cooling, and wherein $F_0 \cos \omega_f t$ is said external periodic force.

Further, in an embodiment, for estimating said amplitude ($F_0$) of the external force, said jump frequency is measured repeatedly for uniformly distributed relative phases ($\vartheta$) between the parametric drive and the external force, wherein said measured jump frequencies are averaged over said phases, and wherein preferably a linear relationship between said averaged jump frequencies and the amplitude of the force is used to estimate said amplitude.

As already stated above, a further aspect of the present invention relates to a sensor according to claim 9, which sensor is preferably configured to conduct the method according to the invention.

According to claim 9 the sensor for measuring the amplitude ($F_0$) of a periodic force, comprises:

- a nonlinear oscillator comprising a Duffing nonlinearity $\alpha$,

- a parametric drive configured to parametrically drive the nonlinear oscillator,

- a means to exert a periodic external force onto the oscillator, wherein the amplitude of said external force is to be measured by the sensor,

- preferably a means to exert the requisite nonlinear feedback cooling on the oscillator,

- wherein the oscillator is configured such that the frequency response of the oscillator exhibits a double jump hysteresis, wherein when the frequency $\omega_p$ of the parametric drive and the frequency $\omega_f$ of the external force are swept downwards in case of positive $\alpha$ and upwards in case of negative $\alpha$ (e.g. towards and/or across the resonance frequency $\omega_0$ of the underlying unperturbed linear oscillator) the frequency response $|X|$ of the oscillator exhibits a first jump and a successive second jump,

- a means configured to sweep said frequencies ($\omega_p$ and $\omega_f$) of the parametric drive and the external force downwards for positive $\alpha$ and upwards for negative $\alpha$, and

- a measuring means configured to measure a jump frequency $\omega^*$ of the parametric drive at which the second jump occurs and/or the height of the second jump,

- an analyzing means configured to estimate said amplitude of said force $F_0$ using said measured jump frequency $\omega^*$ and/or said height.

Generally, the oscillator may be configured as described herein with respect to the various embodiments of the method according to the invention.

Further, according to an embodiment of the sensor according to the present invention said oscillator is a laser-trapped nanoparticle in a vacuum. In the framework of the present invention, a nanoparticle is a particle that comprises a diameter having an order of magnitude of $\sim 10^{-9}$ m or less.

Further, alternatively, according to an alternative embodiment of the sensor according to the present invention, the oscillator is formed by an NEMS, preferably in the form of a graphene resonator or a nanotube based NEMS (see also above).

Further features, embodiments, aspects and advantages of the present invention shall be described by means of a detailed description with reference to the Figures, wherein

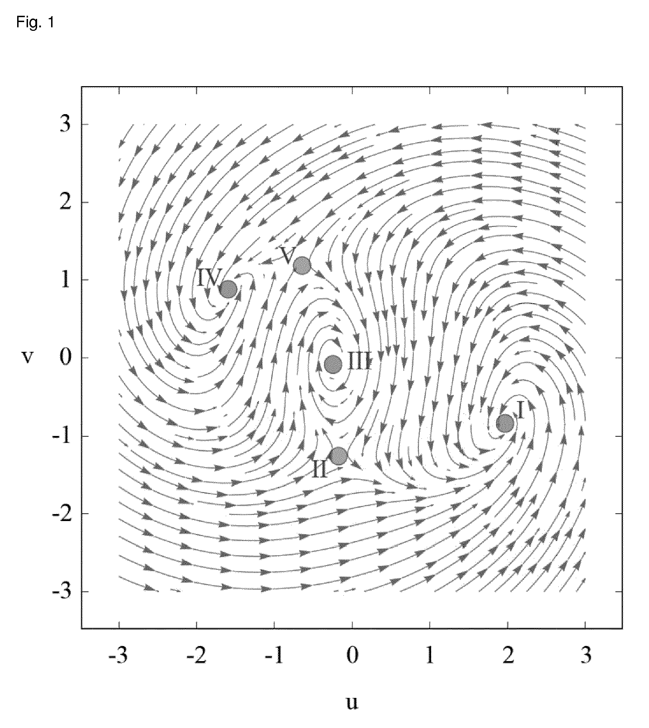

Fig.1   shows trajectories of the nonlinear parametric resonator in slow variables ·u and v. The parameters chosen correspond to the unstable regime of the unforced linear parametric resonator: $\lambda = 0.016$, $\overline{F}_0 = 6 \times 10^{-3}$, $\overline{\gamma} = 1 \times 10^{-3}$, $\overline{\alpha} = 7 \times 10^{-3}$, $\overline{\eta} = 5 \times 10^{-3}$ and $\vartheta = 0$. The green circles (denoted I, III, and IV) denote stable solutions and red circles (denoted II and V) unstable ones;

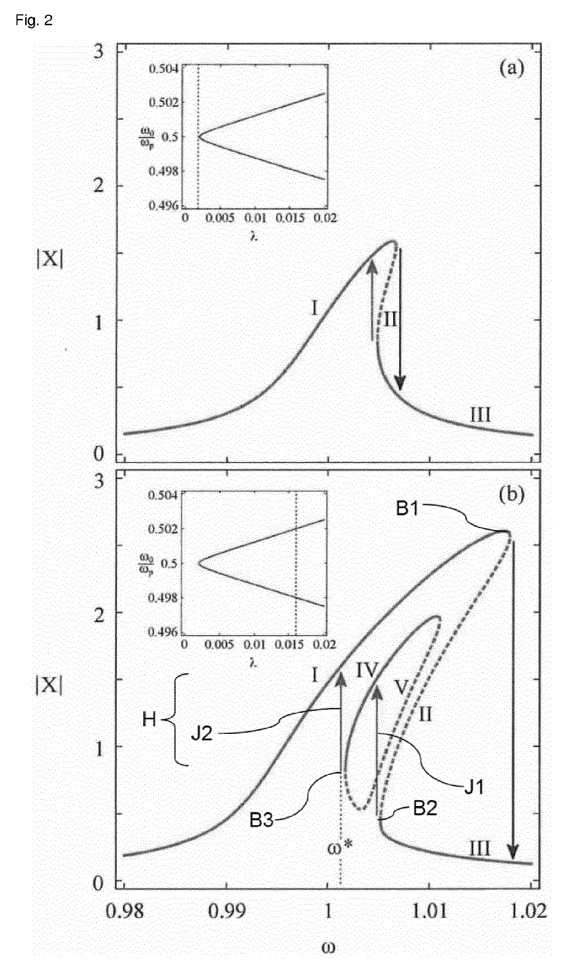

Fig.2   shows typical frequency responses of the system described by Eq. (1) where $\omega$ is in units of $\omega_0$ and $|X|$ in units of $\sqrt{\gamma\omega_0/\alpha}$. (a) $\lambda = 0.002$ below the instability threshold (dashed line in inset); (b) $\lambda = 0.016$ above the instability threshold (dashed line in inset). Stable branches are indicated by whole lines, while unstable branches by dashed lines. The parameters $\overline{F}_0 = 6 \times 10^{-3}$, $\overline{\gamma} = 1 \times 10^{-3}$, $\overline{\alpha} = 7 \times 10^{-3}$, $\overline{\eta} = 5 \times 10^{-3}$ and $\vartheta = 0$ are the same in both (a) and (b). The insets show the first Arnold tongue of the unforced linear parametric resonator ($\alpha = \eta = F_0 = 0$) (continuous lines) and the chosen values of $\lambda$ (dashed lines);

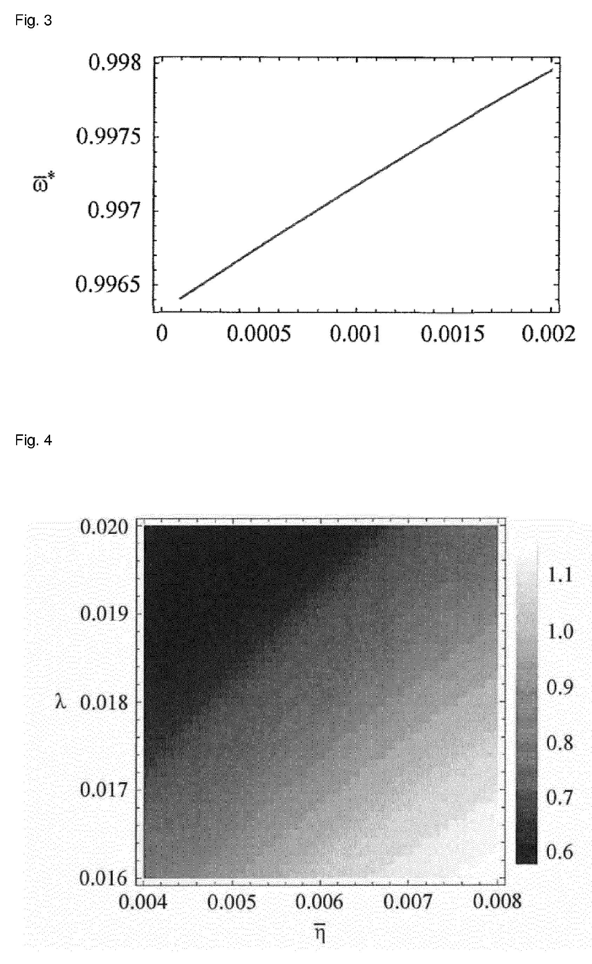

Fig.3   shows the jump frequency $\overline{\omega}^*$ as a function of the strength of the external force averaged over a uniformly distributed phase $\vartheta$. The parameters are given by $\lambda = 0.016$, $\overline{\gamma} = 1 \times 10^{-3}$, $\overline{\alpha} = 7 \times 10^{-3}$, $\overline{\eta} = 5 \times 10^{-3}$;

Fig.4   shows the sensitivity $\overline{\kappa}$ as a function of the strength of the parametric drive $\lambda$ and nonlinear damping $\overline{\eta}$. The force range is the same as in Fig. 3, as well as $\overline{\gamma} = 1 \times 10^{-3}$, $\overline{\alpha} = 7 \times 10^{-3}$. The other parameters are kept fixed; and

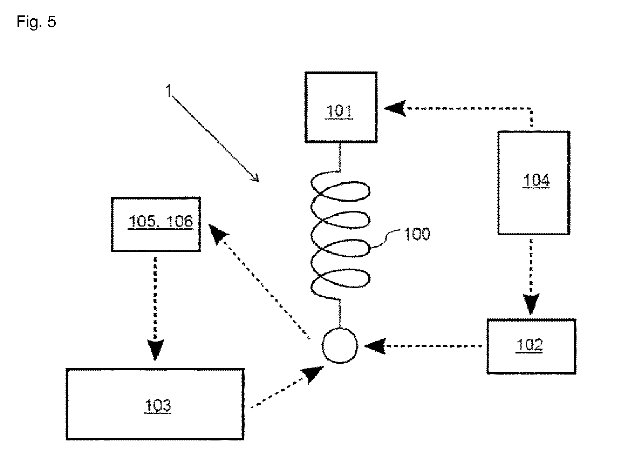

Fig.5   shows a schematic illustration of a sensor set-up according to the invention which is applicable to nonlinear oscillators spanning a wide range of sizes ranging from macroscopic realizations all the way to nano scale sensors.

Particularly, in an embodiment, the equation of motion governing the dynamics of parametrically driven nonlinear oscillator of mass M subject to a periodic external force is

$$\ddot{x} + \omega_0{}^2\bigl(1 - \lambda \cos \omega_p t\bigr)x + \gamma\dot{x} + \alpha x^3 + \eta x^2 \dot{x} = \frac{F_0}{M}\cos \omega_f t \qquad (1)$$

where, $\omega_0$ is the unperturbed frequency of the linear oscillator, $\gamma$ the linear damping and $\lambda$ and $\omega_p$ denote the strength and frequency of the parametric drive. The nonlinearities are preferably described by the Duffing parameter $\alpha$ characterizing the quartic contribution to the oscillator potential, and $\eta$ the strength of the nonlinear feedback cooling (also referred to as nonlinear damping) used in generic experimental setups [19]. The term on the right hand side of (1) refers to a periodic external force of strength $F_0$ and frequency $\omega_f$. The well known Eq. (1) generically describes the physics of resonators realized in a very wide range of experimental setups. In this regard, the present invention particularly relates to the detection of the force $F_0$ by the oscillator. In the following - without loss of generality or limiting the scope of protection of the present invention - a positive Duffing parameter $\alpha$ is considered. However, the results for positive values of the Duffing parameter can be straightforwardly extended to the case of negative Duffing coefficients (see also below).

Whereas Eq. (1) describes the dynamics of an oscillator commonly used for sensing, there is no exact solution to it. Most MEMS have very weak nonlinearities and can be effectively treated as linear oscillators. In this linear regime $\alpha = \eta = 0$, and in the absence of parametric driving ($\lambda = 0$), the linear oscillator exhibits a standard resonance when the frequency of the external drive $\omega_f = \omega_0$. Damping $\gamma$ merely broadens this resonance feature, making it possible to extract the amplitude of the external force from the height of the resonance peak. Noise and thermal fluctuations can however smear this resonance feature making it difficult to detect forces in any experimental setup. Parametric driving was proposed as a way of increasing signal-to-noise ratios for force detection via the phenomenon of parametric resonance [15]. Parametric driving results in Arnold's stability tongues which separate areas where the oscillator has a stable trajectory from areas where oscillator is exponentially unstable. Parametric resonance occurs whenever the parametric pump frequency satisfies the resonance condition $\omega_p = 2\omega_0/n$, where $n$ is an integer which labels the instability tongues. Parametric driving effectively reduces the effect of damping, thereby increasing the signal. However, if the parametric gain become larger than the intrinsic damping, the resonator becomes unstable. From the perspective of both gain and signal-to-noise ratios, parametric pumping is most efficient around the first instability tongue.

Generally, nonlinearities limit the exponential growth of the amplitude and stabilize the regions of instability. Nonetheless, the nonlinear parametric oscillator retains a precise memory of the instability regions of the parametric linear oscillator. Bifurcations arise in this problem which essentially change the nature of the associated response. As a result, in the absence of an external force $F_0 = 0$, tracking the response of the nonlinear parametric oscillator permits a remarkably sensitive detection of mass [17].

In contrast, the present invention preferably relates to studying the response of oscillators, such as parametric NEMS, to an external force, $F_0 \neq 0$, in the nonlinear regime. Thus, the full Eq. (1) is considered here. It is a non-autonomous, inhomogeneous and nonlinear differential equation that does not permit an analytic solution for generic parameters. Nonetheless, in typical experiments, as well as in embodiments and examples described herein, the focus is on the first parametric resonance of the system, i.e. operating around twice the bare frequency of the undriven oscillator $\omega_p \approx 2\omega_0$ while the frequency of the external drive is $\omega_f \approx \omega_0$. As shown below, approximate analytic solutions to the frequency dependent response can be obtained in these experimentally relevant parameter regimes.

To analyze the equation of motion (Eq. (I)) in this regime, a perturbative averaging method is preferably used, which replaces the full time dependent equation by time independent averaged equations of motion. Using this method the frequency region around the first instability lobe is parametrized by setting $\omega_p = 2\omega$ and $\omega_f = \omega$, with $\omega \approx \omega_0$.

Additionally, a detuning parameter $\Omega = \omega_0^2 - \omega^2$ is introduced. The frequency of the external drive is chosen to be half the value of the parametric pump frequency.

With the parameters so defined, Eq. (1) can be recast as a pair of first order equations

$$y = \dot{x} \qquad (2)$$

$$\dot{y} + \omega^2 x = f(x, y, t) \qquad (3)$$

where

$$f(x, y, t) = -\Omega x - \gamma y - \alpha x^3 - \eta x^2 y + \lambda \omega_0^2 \cos(2\omega t) x + \frac{F_0}{M} \cos(\omega t + \vartheta) \qquad (4)$$

where $\vartheta$ denotes the relative phase between the two drives. Note that, the present perturbative method works best in case the detuning $\Omega$, linear and nonlinear damping $\gamma$ and $\eta$, Duffing coefficient $\alpha$, and the amplitude $\lambda$ are small compared to $\omega_0$. The next step consists in bringing Eq. (3) into the so-called standard form for averaging, i.e., into a form $\dot{x}=\varepsilon f(x,y,t)$ with $0 < \epsilon \ll 1$. This is accomplished using the van der Pol transformation to variables $U$ and $V$,

$$\begin{pmatrix} x \\ y \end{pmatrix} = \begin{pmatrix} \cos \omega t & -\sin \omega t \\ -\omega\sin \omega t & -\omega\cos \omega t \end{pmatrix} \begin{pmatrix} U \\ V \end{pmatrix} \qquad (5)$$

Substituting (5) in (3) and averaging over the time period $T = 2\pi/\omega$, one obtains the equations for the slow flow

variables $u = \overline{U}$ and $v = \overline{V}$, corresponding to time-averaged $U$ and $V$ over the time cycle:

$$\dot{u} = -\frac{1}{2\omega}\left[\gamma\omega u + v\left(\Omega + \frac{\lambda\omega_0^2}{2}\right) + \frac{3\alpha}{4}(u^2 + v^2)v + \omega\frac{\eta}{4}(u^2 + v^2)u - \frac{F_0}{M}\sin\vartheta\right] \tag{6}$$

$$\dot{v} = -\frac{1}{2\omega}\left[\gamma\omega v + u\left(-\Omega + \frac{\lambda\omega_0^2}{2}\right) - \frac{3\alpha}{4}(u^2 + v^2)u + \omega\frac{\eta}{4}(u^2 + v^2)v + \frac{F_0}{M}\cos\vartheta\right] \tag{7}$$

Despite the perturbative nature of the averaging method, it is valid for a surprisingly large range of values of the drive amplitude $\lambda$ as well as for substantial detuning $\Omega$.

The coupled slow flow Eqs. (6) and (7) remain analytically insolvable. However, from the perspective of measurements, one only needs to know the frequency response of the oscillator $|X| = (u^2 + v^2)^{1/2}$. This is a property of the steady-state and does not require knowledge of transients. Consequently, in the steady-state, one sets $\dot{u} = \dot{v} = 0$ in Eqs. (6) and (7), and one finds that the response $|X|^2$ satisfies the following polynomial equation

$$|\overline{X}|^2\left(\left(\overline{\gamma}\overline{\omega} + \frac{\overline{\eta}}{4}\overline{\omega}|\overline{X}|^2\right)^2 - \left(\frac{\lambda}{2}\right)^2 + \left(\overline{\Omega} + \frac{3\overline{\gamma}}{4}|\overline{X}|^2\right)^2\right)^2 = \overline{F}_0^2\left(\left(\overline{\gamma}\overline{\omega} + \frac{\overline{\eta}}{4}\overline{\omega}|\overline{X}|^2\right)^2 + \left(\frac{\lambda}{2}\right)^2 + \right.$$

$$\left.\left(\overline{\Omega} + \frac{3\overline{\gamma}}{4}|\overline{X}|^2\right)^2 + \lambda\left(\overline{\Omega} + \frac{3\overline{\gamma}}{4}|\overline{X}|^2\right)\cos 2\vartheta + \lambda\left(\overline{\gamma}\overline{\omega} + \frac{\overline{\eta}}{4}\overline{\omega}|\overline{X}|^2\right)\sin 2\vartheta\right) \tag{8}$$

where $\overline{\gamma} = \gamma/\omega_0$, $\overline{\omega} = \omega/\omega_0$, $\overline{\eta} = \eta\omega_0/\alpha$, $\overline{\Omega} = 1 - \overline{\omega}^2$, $\overline{\alpha} = \alpha/\omega_0^2$, $|\overline{X}|^2 = |X|^2\,\alpha/(\gamma\omega_0)$ and the renormalized dimensionless external force $\overline{F}_0 = (F_0/M\,\omega_0^2)\sqrt{\overline{\alpha}/\overline{\gamma}}$. Equation (8) determines the response in a finite frequency interval $\omega$ around $\omega_0$ (see Fig. 2). Obtaining the response for arbitrary $\omega$ requires a non-perturbative approach or the retention of higher order corrections.

As will be shown below, the interplay between the periodic external force, parametric drive and nonlinearities leads to two qualitative different behaviors for the response depending on the position in parameter space. The solutions to the fifth order polynomial [Eq. (8)] can be stable or unstable. The stabilities can be directly inferred from the basins of attraction for this equation, plotted in Fig. 1. One find that typically one has three stable solutions (I, III and IV) and two unstable solutions (II and V).

For positive Duffing nonlinearity and small amplitudes of the parametric drive $\lambda$ pertaining to the stable regime [see inset in Fig. 2(a)], the response shown in Fig. 2(a) is dominated by the external force and resembles that of the Duffing oscillator. Here the stable solutions I and IV become degenerate and the response has two stable branches (I and III) and one degenerate unstable branch (II). As $\lambda$ increases and one crosses over to the unstable regime of the underlying linear oscillator [see inset in Fig. 2(b)], the degeneracies of both stable and unstable solutions are broken corresponding to the three stable attractors and two saddle points shown in Fig. 1. This generates a qualitatively different response as shown in Fig. 2(b), with an enhanced Duffing-type response encompassing an island-like structure. This is due to a complex interplay between the cubic nonlinearity, the external force and the parametric drive. It has been found that this response cannot be obtained without the periodic external force. As $F_0$ increases, the island is raised and shifted to larger frequencies. A sufficiently strong $F_0$ wipes out the internal island and the resulting frequency response is external force dominated and appears Duffing-like. In the limit $F_0 \to 0$, one recovers the known case where I and IV (II and V) coalesce to a single stable (unstable) branch. The presence of $F_0$ thus leads to a splitting of the stable (unstable) branch into two stable (unstable) branches. In the following the dependence of this novel response on the various tunable parameters in the system is analyzed. The driving strength $\lambda$ strongly affects both the maximal amplitude of the response as well as the frequency at which the intermediate stable branch originates. As $\lambda$ increases, the intermediate branch dips further towards lower frequencies though the maximal response increases. Linear damping $\gamma$, on the other hand simply shifts the stability boundaries of the linear parametric oscillator away from the $\lambda = 0$ axis [see Fig. 2(a)]. As a result, for the response, it plays a role akin to the inverse of the driving strength $\lambda$, i.e. the larger the damping, the smaller the response and the origin of the intermediate branch is pushed to higher frequencies. For sufficiently large damping $\gamma$ one enters the parameter region where the linear oscillator is stable and one recovers the typical response of Fig. 2(a). Importantly, nonlinear damping $\eta$ caps the response when $\omega$ increases, but it preserves the intermediate stable branch and the island-like structure.

Advantageously, the amplitude of the near resonant periodic external force can be directly extracted from the qualitatively new response discussed earlier. The presence of stable and unstable branches in the response is expected to lead to hysteretic behavior during upward and downward sweeps of the frequency $\omega$ across $\omega_0$. Consider the response for weak parametric driving plotted in Fig. 2(a). For upward sweeps of the frequency across $\omega_0$, the response will gradually increase along branch I all the way to the maximal value where it hits the upper bifurcation and will then abruptly drop to the value of the lower stable branch III. For downward sweeps, the response slowly increases along branch III and then jumps abruptly to the stable branch I. This is very similar to the standard Duffing-like hysteresis seen in many systems both in the presence and absence of an external force. It is found, that the size of the hysteretic jumps particularly depends on the amplitude $F_0$.

For $\lambda$ in the unstable regime of the linear oscillator [cf. Fig. 2(b)], the presence of additional branches in the response leads to a new kind of hysteresis curve. For upward sweeps across the resonance frequency, the response will gradually increase all the way along branch I to the maximal value where it hits the upper first bifurcation B1 and will then abruptly drop to the value of the lower stable branch III. For downward sweeps, the response will increase very slowly across branch III until it hits the second bifurcation B2 where it will abruptly jump to the stable branch IV of the island. It will then decrease further until it hits a third bifurcation B3 of the island at a frequency $\omega^*$ where it will jump (denoted as second jump) to the stable branch I. In short, the presence of stable solutions in the island results in two consecutive jumps in the downward sweeps.

The hysteretic jumps expected for the two response functions corresponding to the stable and unstable regimes for positive $\alpha$ are indicated in Figs. 2. Fig. 2(b) shows a double jump hysteresis whereas Fig. 2(a) shows the standard single jump hysteresis. The second jump in Fig. 2(b) is a direct manifestation of the intermediate stable branch discussed above and exists only when the amplitude of the external force $F_0$ is nonzero. The second jump is lost for high values of $\eta$ as the island shifts to higher frequencies. This feature provides a promising new method to detect weak forces. The force $F_0$ can be extracted both from the magnitude of the second jump as well as the (jump) frequency at which it occurs. One finds that the frequency $\omega^*$ at which this additional (second) jump occurs is a better detector of the force as it is very sensitive to the magnitude of the external force. Its precise dependence on $F_0$ depends on the relative phase between the two drives (i.e. the parametric drive and the external force). However, averaging over a uniformly distributed relative phase which is experimentally relevant, we find that the physical jump frequency $\omega^*$ depends linearly on $F_0$ in a wide range (see Fig. 3). This linearity makes it simple to extract the force from precise measurements of the jump frequency $\omega^*$. For locked in values of the relative phase, $\omega^*$ has an additional quadratic dependence on the external force which is non-negligible for higher values of $F_0$.

In Fig. 4, the phase averaged dimensionless sensitivity of the device $\overline{\kappa}$, i.e. the slope of the $\overline{\omega^*}$- $\overline{F_0}$ curve ($\overline{\omega^*}$ = $\omega^*/\omega_0$) is plotted as a function of two experimentally tunable parameters $\lambda$ and $\overline{\eta}$. The dimensionfull sensitivity is given by

$$\kappa = \bar{\kappa}\frac{\sqrt{|\alpha|Q}}{M\omega_0{}^2}$$

Similar double jump hysteresis is expected for a system with negative Duffing parameter $\alpha$ where the response tilts towards the left (spring softening). In this case, $\omega^*$ decreases linearly with increasing $F_0$ but the sensitivity, given by the magnitude of the slope is expected to be the same as that for positive $\alpha$. To summarize, a direct measurement of the hysteresis curve in the nonlinear regime of the parametrically driven resonator permits a straightforward extraction of the amplitude of the external force.

From an experimental perspective, as described herein, a nonlinear oscillator with well characterized Duffing nonlinearity and preferably with tunable parametric modulation as well as nonlinear feedback cooling as shown in Fig. 5 is preferably used. The latter is particularly useful in generating a sizable second hysteretic jump.

According to Fig. 5, the sensor 1 according to the invention may comprise a nonlinear oscillator 100 as described herein, a parametric drive 101 configured to parametrically drive the nonlinear oscillator 100, a means 102 to exert a periodic external force onto the oscillator 100, wherein the amplitude of said external force is to be measured by the sensor 1, a means 103 configured to exert a nonlinear feedback cooling on the oscillator 100, wherein the oscillator 100 is configured such that the frequency response of the oscillator exhibits a double jump hysteresis, wherein when the frequency $\omega_p$ of the parametric drive and the frequency $\omega_f$ of the external force are swept downwards for positive $\alpha$ and upwards for negative $\alpha$, the frequency response $|X|$ of the oscillator exhibits a first jump J1 and a successive second jump J2 as described herein, a means 104 configured to sweep said frequency $\omega_p$ of the parametric drive 101 and the frequency $\omega_f$ of the external force 102 downwards for positive $\alpha$ and upwards for negative $\alpha$, and a measuring means 105 configured to measure a jump frequency $\omega^*$ of the parametric drive at which the second jump occurs and/or the height H of the second jump J2. The sensor may further comprises an analyzing means 106 configured to estimate said amplitude of said force $F_0$ using said measured jump frequency $\omega^*$ and/or said height H as described herein.

In an embodiment, the sensor may first be calibrated, i.e. its sensitivity $\kappa$, may be obtained via a series of measurements of $\omega^*$ for different values of known force amplitudes $F_0$. Particularly, once the sensitivity is known, the sensor can be used to measure the amplitude of an unknown external force.

In the following the magnitudes of the forces that can be detected via the double hysteresis scheme according to the invention are discussed. Going back to dimensional units, one sees that the typical detected force is

$$F_0 = \frac{M\omega_0{}^3}{\sqrt{|\alpha|Q}}\bar{F}_0, \qquad (9)$$

where $Q \equiv \bar{\gamma}^{-1}$ is the quality factor of the device. The range of the magnitude of the forces that can be detected with our present scheme explicitly depends on the defining parameters of the resonator. As expected, devices with high Q and low masses are prerequisites for measuring weak forces. One also sees that the Duffing nonlinearity $\alpha$ plays a determining role in the detection of weak forces: the stronger the nonlinearity, the weaker the force that can be detected.

**Examples**

In the following estimates for the range of forces which can be detected with three different resonators/oscillators are stated. Firstly, a laser-trapped nanoparticle in high vacuum [13] with a very high quality factor and a negative Duffing coefficient $\alpha$ is considered. This system allows for a wider manipulation of the system parameters with the added advantage of negligible thermal noise. The system parameters are

$M \approx 3 \times 10^{-18}$ kg, $\omega_0 \approx 10^5$s$^{-1}$, the damping $\gamma \approx 10^{-7}$s$^{-1}$ (controlled through the air pressure) and $|\alpha| \approx 10^{-1}$m$^{-2}$s$^{-2}$. The nonlinear damping due to feedback cooling can be tuned in a range around $\eta = 10^{-2}$m$^{-2}$s$^{-1}$ and the typical amplitude of the parametric drive is $\lambda \approx 0.04$. Substituting this parameters in (9) one finds that $F_0 \approx 10^{-6}\bar{F}_0$N. The smallest $\bar{F}_0$ that can be obtained through a measmement of the jump frequency, depends on whether in a particular device, the second hysteretic jump can be clearly detected above the noise threshold. It was found that for a reasonable range of parametric driving and nonlinear damping $\bar{F}_0 = 10^{-2} \sim 10^{-6}$ should be detectable in low noise setups like the laser trapped nanoparticles. This implies that nanoparticle resonators can detect forces of the order of pico Newtons with a sensitivity $\kappa$ of the order of $10^{11}$Hz/N.

Further, two examples of lighter NEMS with pronounced nonlinearities are considered. For graphene resonators with $Q = 10^4$, $M \approx 10^{-19}$kg, $\omega_0 \approx 10^9$s$^{-1}$, $\alpha \approx 10^{12}$M$^{-1}$kg m$^{-2}$s$^{-2}$ one obtains $F_0 \approx 10^{-10}\bar{F}_0$N.

For nanotube based NEMS, the relevant parameters are $Q = 10^4$, $M \approx 10^{-21}$kg, $\omega_0 \sim 10^7$s$^{-1}$, $\alpha \sim 10^{13}$M$^{-1}$kg m$^{-2}$s$^{-2}$ and one obtains $F_0 \approx 10^{-18}\bar{F}_0$N.

We found that graphene resonators can measure forces in the femto-attoNewton range whereas nanotube resonators can measure forces in the subattozeptoNewton range. Both these devices/sensors will also have extremely high sensitivities.

We expect weak thermal fluctuations to broaden the response and modify the size of the hysteretic jumps, but leave $\omega^*$ effectively unchanged. As a result, thermal noise will not have any qualitative impact on our detection scheme for devices with very high $Q$ factors. Generically, we expect the force to be detectable as long as the second jump is visible above the background noise. This should hold true as long as the system parameters as well as noise are such that one avoids activation to degenerate states or higher energy states.

To conclude, we have presented a novel method, based on the exploitation of the inherent nonlinearities of an oscillator/resonator, for an ultrasensitive detection of weak forces using nonlinear parametric resonators. NEMS with relatively large Duffing nonlinearity $\alpha$ are preferred candidates for the force detection scheme according to the invention. Depending on the device, our scheme shows that an extremely wide array of forces ranging from micro Newtons to zepto Newtons can be sensitively measured.

While our method has the potential to achieve force sensitivities on par with the best techniques available today, it has several advantages that make it easier to implement. Traditional force sensing relies on measuring the linear displacement of the resonator in response to an external force. In the limit of very small forces, this displacement becomes vanishingly small and very hard to detect. In order to be sensitive to forces across several orders of magnitude, the detection setup has to be able to accommodate signals over a large range of amplitudes. In contrast, our method based on detecting frequencies via a hysteresis makes it easier to detect force signals over a large range with one and the same setup.

**References**

[1] D. Rugar, R. Budakian, H. J. Mamin, and B. W. Chui, Nature 430, 329 (2004).

[2] Y. T. Yang, C. Callegari, X. L. Feng, K. L. Ekinci, and M. L. Roukes, Nano Letters 6, 583 (2006).

[3] M. Poggio, Nat Nano 8, 482 (2013).

[4] H. J . Mamin and D. Rugar, Appl. Phys. Lett. 79, 3358 (2001).

[5] J. D. Teufel, T. Donner, M. A. Castellanos-Beltran, J. W. Harlow, and K. W. Lehnert, Nat Nano 4, 820 (2009).

[6] Y. Tao, J. M. Boss, B. A. Moores, and C. L. Degen, Nat Commun 5 (2014).

[7] L. Lin and W. Yun, in Aerospace Conference (1998), vol. 1, pp. 429-436.

[8] L. A. Pinnaduwage, A. Gehl, D. L. Hedden, G. Muralidharan, T. Thundat, R. T. Lareau, T . Sulchek, L. Manning, B. Rogers, M. Jones, et al., Nature 425,474 (2003).

[9] A. Gupta, D. Akin, and R. Bashir, Appl. Phys. Lett. 84, 1976 (2004).

[10] G. Binnig, C. F. Quate, and C. Gerber, Phys. Rev. Lett. 56,930 (1986).

[11] J. A. Sidles, J. L. Garbini, K. J. Bruland, D. Rugar, O. Züger, S. Hoen, and C. S. Yannoni, Rev. Mod. Phys. 67, 249 (1995).

[12] J. Gieseler, L. Novotny, and R. Quidant, Nat Phys 9, 806 (2013).

[13] J. Gieseler, M. Spasenovic, L. Novotny, and R. Quidant, Phys. Rev. Lett. 112, 103603 (2014).

[14] J. Chaste, A. Eichler, J. Moser, G. Ceballos, R. Rurali, and A. Bachtold, Nat Nano 7, 301 (2012).

[15] D. Rugar and P. Grütter, Phys. Rev. Lett. 67, 699 (1991).

[16] H. W. C. Postma, I. Kozinsky, A. Husain, and M. L. Roukes, Appl. Phys. Lett. 86, 223105 (2005).

[17] W. Zhang, R. Baskaran, and K. L. Turner, Sensors and Actuators A: Physical 102, 139 (2002).

[18] L. G. Villanueva, E. Kenig, R. B. Karabalin, M. H. Matheny, R. Lifshitz, M. C. Cross, and M. L. Roukes, Phys. Rev. Lett. 110, 177208 (2013).

[19] J. Gieseler, B. Deutsch, R. Quidant, and L. Novotny, Phys. Rev. Lett. 109, 103603 (2012).

**Claims**

1. Method for measuring the amplitude ($F_0$) of a periodic force, wherein the method comprises the steps of:

- providing a parametrically driven nonlinear oscillator subject to a periodic external force whose amplitude ($F_0$) is to be measured, wherein said oscillator comprises a positive or a negative Duffing nonlinearity $\alpha$,
- wherein the oscillator is configured such that the frequency response of the oscillator exhibits a double jump hysteresis, wherein when the frequency ($\omega_p$) of the parametric drive and the frequency ($\omega_f$) of the external force are swept downwards for positive $\alpha$ and upwards for negative $\alpha$ the frequency response ($|X|$) of the oscillator exhibits a first jump (J1) and a successive second jump (J2),
- sweeping said frequency ($\omega_p$) of the parametric drive and said frequency ($\omega_f$) of the external force downwards for positive $\alpha$ and upwards for negative $\alpha$, wherein a jump frequency ($\omega^*$) of the parametric drive at which the second jump occurs and or the height (H) of the second jump (J2) are measured, and
- wherein said amplitude of said force ($F_0$) is determined using said jump frequency ($\omega^*$) and/or said height (H).

2. Method according to claim 1, **characterized in that** the frequency ($\omega_p$) of the parametric drive is detuned by less than 4% from twice the resonance frequency ($\omega_0$) of the underlying unperturbed linear oscillator, and wherein the frequency ($\omega_f$) of the periodic external force ($F_0$) is detuned by less than 4% from the resonance frequency ($\omega_0$).

3. Method according to claim 1, **characterized in that** the strength ($\lambda$) of the parametric drive is chosen to be in the unstable regime of the underlying linear oscillator.

4. Method according to one of the preceding claims, **characterized in that** the oscillator is configured such that when the frequency ($\omega_p$) of the parametric drive is swept upwards across the resonance frequency ($\omega_0$) of the underlying unperturbed linear oscillator, the frequency response ($|X|$) gradually increases along a first stable branch (I) to a maximal value where it hits a first upper bifurcation (B1) and then abruptly drops to a value of a lower second stable branch (III), and when the frequency ($\omega_p$) of the parametric drive is swept downwards again, the frequency response ($|X|$) increases across said lower second branch (III) until it hits a second bifurcation (B2), where it abruptly undergoes said first jump (J1) to a stable third branch (IV), from which it then decreases further until it hits a third bifurcation (B3) at said jump frequency ($\omega^*$) where it undergoes said second jump (J2) to said stable first branch (I).

5. Method according to one of the preceding claim, **characterized in that** the equation of motion governing the dynamics of said parametrically driven nonlinear oscillator subject to said periodic external force is

$$\ddot{x} + \omega_0{}^2\big(1 - \lambda \cos \omega_p t\big)x + \gamma \dot{x} + \alpha x^3 + \eta x^2 \dot{x} = \frac{F_0}{M}\cos \omega_f t \qquad (1)$$

where, M is the mass of the oscillator, $\omega_0$ is said resonance frequency of the linear oscillator, $\gamma$ the linear damping and $\lambda$ and $\omega_p$ denote the strength and frequency of the parametric drive, and wherein the nonlinearities are described by the Duffing parameter $\alpha$, and wherein $\eta$ is the strength of the nonlinear feedback cooling, and wherein $F_0 \cos \omega_f t$ is said external periodic force.

6. Method according to one of the preceding claims, **characterized in that** for estimating said amplitude ($F_0$) of the external force, said jump frequency is measured repeatedly for uniformly distributed relative phases ($\vartheta$) between the parametric drive and the external force, wherein said measured jump frequencies are averaged over said phases, and wherein preferably a linear relationship between said averaged jump frequencies and the amplitude of the force is used to estimate said amplitude.

7. Method according to one of the preceding claims, **characterized in that** said oscillator is a laser-trapped nanoparticle in a vacuum.

8. Method according to one of the claims 1 to 6, **characterized in that** the oscillator is formed by an NEMS, preferably in the form of a graphene resonator or a nanotube based NEMS.

9. Sensor (1) for measuring the amplitude ($F_0$) of a periodic force, comprising:

   - a nonlinear oscillator (100) having a positive or a negative Duffing nonlinearity $\alpha$,
   - a parametric drive (101) configured to parametrically drive the nonlinear oscillator (100),
   - a means (102) to exert a periodic external force onto the oscillator (100), wherein the amplitude of said external force is to be measured by the sensor (1),
   - a means (103) configured to exert a nonlinear feedback cooling on the oscillator (100),
   - wherein the oscillator (100) is configured such that the frequency response of the oscillator exhibits a double jump hysteresis, wherein when the frequency ($\omega_p$) of the parametric drive and the frequency ($\omega_f$) of the external force are swept downwards for positive $\alpha$ and upwards for negative $\alpha$ the frequency response ($|X|$) of the oscillator exhibits a first jump (J1) and a successive second jump (J2),
   - a means (104) configured to sweep said frequency ($\omega_p$) of the parametric drive (101) and the frequency ($\omega_f$) of the external force (102) downwards for positive $\alpha$ and upwards for negative $\alpha$, and
   - a measuring means (105) configured to measure a jump frequency ($\omega^*$) of the parametric drive at which the second jump occurs and/or the height (H) of the second jump (J2),
   - an analyzing means (106) configured to estimate said amplitude of said force ($F_0$) using said measured jump frequency ($\omega^*$) and/or said height (H).

10. Sensor according to claim 9, **characterized in that** said oscillator (100) is a laser-trapped nanoparticle in a vacuum.

**11.** Sensor according to claim 9, **characterized in that** the oscillator (100) is formed by an NEMS, preferably in the form of a graphene resonator or a nanotube based NEMS.

Fig. 1

Fig. 2

Fig. 3

Fig. 4

Fig. 5

Europäisches
Patentamt

European
Patent Office

Office européen
des brevets

**EUROPEAN SEARCH REPORT**

Application Number

EP 15 19 5823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/206594 A1 (DATSKOS PANAGIOTIS GEORGE [US] ET AL) 16 August 2012 (2012-08-16) * the whole document * | 1-11 | INV. G01L1/10 B82Y35/00 G01Q60/50 H03B5/30 |
| A | US 6 497 141 B1 (TURNER KIMBERLY L [US] ET AL) 24 December 2002 (2002-12-24) * column 3 * | 1-11 | |
| A | WO 2015/083073 A1 (ISIS INNOVATION [GB]) 11 June 2015 (2015-06-11) * paragraph [0060]; figure 9 * | 1-11 | |
| A | US 2015/153221 A1 (HENTZ SEBASTIEN [FR] ET AL) 4 June 2015 (2015-06-04) * paragraphs [0076], [0077]; figure 7b * | 1-11 | |
| A | US 2013/047710 A1 (RHOADS JEFFREY FREDERICK [US] ET AL) 28 February 2013 (2013-02-28) * paragraphs [0047], [0063] * | 1-11 | TECHNICAL FIELDS SEARCHED (IPC) G01L B82Y G01Q G01H H03B G01D |

The present search report has been drawn up for all claims

| Place of search | Date of completion of the search | Examiner |
|---|---|---|
| The Hague | 20 May 2016 | Debesset, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 171 145 A1**

## ANNEX TO THE EUROPEAN SEARCH REPORT
## ON EUROPEAN PATENT APPLICATION NO.

EP 15 19 5823

20-05-2016

| Patent document cited in search report | | | Publication date | Patent family member(s) | | | Publication date |
|---|---|---|---|---|---|---|---|
| US 2012206594 | A1 | | 16-08-2012 | NONE | | | |
| US 6497141 | B1 | | 24-12-2002 | NONE | | | |
| WO 2015083073 | A1 | | 11-06-2015 | NONE | | | |
| US 2015153221 | A1 | | 04-06-2015 | EP | 2882101 | A1 | 10-06-2015 |
| | | | | FR | 3014265 | A1 | 05-06-2015 |
| | | | | US | 2015153221 | A1 | 04-06-2015 |
| US 2013047710 | A1 | | 28-02-2013 | NONE | | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. RUGAR ; R. BUDAKIAN ; H. J. MAMIN ; B. W. CHUI.** *Nature,* 2004, vol. 430, 329
- **Y. T. YANG ; C. CALLEGARI ; X. L. FENG ; K. L. EKINCI ; M. L. ROUKES.** *Nano Letters,* 2006, vol. 6, 583
- **M. POGGIO.** *Nat Nano,* 2013, vol. 8, 482
- **H. J . MAMIN ; D. RUGAR.** *Appl. Phys. Lett.,* 2001, vol. 79, 3358
- **J. D. TEUFEL ; T. DONNER ; M. A. CASTELLANOS-BELTRAN ; J. W. HARLOW ; K. W. LEHNERT.** *Nat Nano,* 2009, vol. 4, 820
- **Y. TAO ; J. M. BOSS ; B. A. MOORES ; C. L. DEGEN.** *Nat Commun,* 2014, 5
- **L. LIN ; W. YUN.** *Aerospace Conference,* 1998, vol. 1, 429-436
- **L. A. PINNADUWAGE ; A. GEHL ; D. L. HEDDEN ; G. MURALIDHARAN ; T. THUNDAT ; R. T. LAREAU ; T . SULCHEK ; L. MANNING ; B. ROGERS ; M. JONES et al.** *Nature,* 2003, vol. 425, 474
- **A. GUPTA ; D. AKIN ; R. BASHIR.** *Appl. Phys. Lett.,* 2004, vol. 84, 1976
- **G. BINNIG ; C. F. QUATE ; C. GERBER.** *Phys. Rev. Lett.,* 1986, vol. 56, 930

- **J. A. SIDLES ; J. L. GARBINI ; K. J. BRULAND ; D. RUGAR ; O. ZÜGER ; S. HOEN ; C. S. YANNONI.** *Rev. Mod. Phys.,* 1995, vol. 67, 249
- **J. GIESELER ; L. NOVOTNY ; R. QUIDANT.** *Nat Phys,* 2013, vol. 9, 806
- **J. GIESELER ; M. SPASENOVIC ; L. NOVOTNY ; R. QUIDANT.** *Phys. Rev. Lett.,* 2014, vol. 112, 103603
- **J. CHASTE ; A. EICHLER ; J. MOSER ; G. CEBALLOS ; R. RURALI ; A. BACHTOLD.** *Nat Nano,* 2012, vol. 7, 301
- **D. RUGAR ; P. GRÜTTER.** *Phys. Rev. Lett.,* 1991, vol. 67, 699
- **H. W. C. POSTMA ; I. KOZINSKY ; A. HUSAIN ; M. L. ROUKES.** *Appl. Phys. Lett.,* 2005, vol. 86, 223105
- **W. ZHANG ; R. BASKARAN ; K. L. TURNER.** *Sensors and Actuators A: Physical,* 2002, vol. 102, 139
- **L. G. VILLANUEVA ; E. KENIG ; R. B. KARABALIN ; M. H. MATHENY ; R. LIFSHITZ ; M. C. CROSS ; M. L. ROUKES.** *Phys. Rev. Lett.,* 2013, vol. 110, 177208
- **J. GIESELER ; B. DEUTSCH ; R. QUIDANT ; L. NOVOTNY.** *Phys. Rev. Lett.,* 2012, vol. 109, 103603